# EUROPÄISCHE PATENTSCHRIFT

(11) **EP 2 813 807 B1**
(45) Veröffentlichungstag und Bekanntmachung des Hinweises auf die Patenterteilung: **27.02.2019**
(21) Anmeldenummer: 14170958.4
(22) Anmeldetag: 03.06.2014
(51) Int. Cl.: G01B 11/24

(54) **Erfassungsvorrichtung von Drehwinkeln einer Stechkanüle**
Recording device for the rotation angles of a puncture cannula
Dispositif de détection d'angles de rotation d'une seringue

(30) Priorität: 04.06.2013 DE 102013105719
(43) Veröffentlichungstag der Anmeldung: 17.12.2014
(73) Patentinhaber: Gerresheimer Regensburg GmbH, 93047 Regensburg (DE)
(72) Erfinder: Bösl, Richard, 92442 Wackersdorf (DE)
(74) Vertreter: Hannke, Christian

(56) Entgegenhaltungen:
- JP-A- H08 178 859
- JP-A- H08 271 444
- US-A- 6 018 860
- US-A1- 2008 049 235
- SCHOTT AG: "Schott und Moriter bieten Medizingeraetherstellern automatisiertes Nadel-Inspektionssystem an", INTERNET CITATION, 31. Oktober 2012 (2012-10-31), XP009180338, Gefunden im Internet: URL:http://www.schott.com/english/news/pre ss.html?NID=3810
- "Machine Vision in Medical Technology: Innovative Needle Inspection System Features - Basler ace GigE Cameras", , March 2013 (2013-03), XP009194538, Retrieved from the Internet: URL:https://www.baslerweb.com/fp-149130689 1/media/en/downloads/documents/success_sto ries/BAS0313_SuccessStory_SCHOTT_Needle_In spection.pdf [retrieved on 2017-05-30]

## Beschreibung

Die vorliegende Erfindung betrifft eine Erfassungsvorrichtung zur Erfassung von Drehwinkeln zumindest einer Stechkanüle, gemäß dem Oberbegriff des Patentanspruches 1.

Bei der Anschlifffläche einer Stechkanüle handelt es sich um eine in einem vorgebbaren Winkel zu der Längsrichtung der Stechkanüle angeschrägte, beispielsweise ebene Fläche, über welche ein durch die Stechkanüle beispielsweise bei späterem Gebrauch hindurchfließendes Medium, beispielsweise ein medizinisches Mittel, ausfließbar und ausströmbar ist. Bei der Stechkanüle kann es sich um eine Hohl- oder auch um eine Vollkanüle bzw. Nadel handeln.

"Quadrantenkoordinatensystem" heißt in diesem Zusammenhang eine Ebene, welche vorzugsweise senkrecht auf einer Transportebene der Transportvorrichtung steht. Dabei kann das Quadrantenkoordinatensystem sich mit der Stechkanüle und/oder dem Nadelträgertransportsystem entlang der Transportrichtung mitbewegen oder aber relativ zur Transportvorrichtung fest stehen, so dass während des Transportierens des Nadelträgertransportsystems entlang der Transportvorrichtung sich die Stechkanülen innerhalb des zu der Transportvorrichtung fixierten Quadrantenkoordinatensystems hindurchbewegen. Vorzugsweise ist das Quadrantenkoordinatensystem dann auch als parallel zur Transportrichtung der Transportvorrichtung in Form einer Ebene definiert. Dabei kann eine Null-Position als ein Punkt und/oder eine Drehlage der Stechkanüle innerhalb des oder relativ zu dem Quadrantenkoordinatensystem festgelegt werden.

Derartige Erfassungsvorrichtungen sind jedoch bereits aus dem Stand der Technik bekannt. Darin werden die Stechkanülen mittels der Transportvorrichtung unterhalb beispielsweise eines Kamerasystems gefahren, dort angehalten und mittels einer mitunter aufwendigen Sensorik eine Lageposition der Stechkanüle zu dem Nadelträgertransportsystem und/oder der Transportvorrichtung bestimmt. Derartige aus dem Stand der Technik bekannte Erfassungsvorrichtungen weisen jedoch erhebliche Nachteile auf. SCHOTT AG: "Schott und Moriter bieten Medizingeraetherstellern automatisiertes Nadel-Inspektionssystem an", 31. Oktober 2012 (2012-10-31), JP H08 178859 A, JP H08 271444 A, US 2008/049235 A1, US 6 018 860 A und "Machine Vision in Medical Technology: Innovative Needle Inspection System Features - Basler ace GigE Cameras", März 2013 (2013-03), beschreiben alle eine Erfassungsvorrichtung zur Erfassung von Drehwinkeln von einem Objekt.

Zum einen ist es nötig, zur Messung einer Lageposition der Stechkanüle das gesamte Transportband zumindest anzuhalten. Aus dem Stand der Technik ist bekannt, dass meist kostspielige Erfassungsvorrichtungen nur dann eine Lagepositionsbestimmung durchführen können, wenn auch die Stechkanüle unterhalb der Kameras stillsteht. Dies führt jedoch zu einer erheblichen Verzögerung in einem Herstellungsprozess einer Vorrichtung umfassend die Stechkanüle, da eine Standzeit unterhalb eines derartigen Kamerasystems eine mittlere Transportgeschwindigkeit entlang der Transportvorrichtung wesentlich verringert.

Zum anderen ist es mittels derartiger Erfassungsvorrichtungen nicht möglich, neben einer Lagepositionsbestimmung der Stechkanüle zusätzlich auch einen Drehwinkel einer Anschlifffläche zu der Null-Position der Stechkanüle feststellen zu können. Eine derartige Bestimmung des Drehwinkels der Stechkanüle ermöglicht jedoch neben einer Positionsbestimmung ebenso eine genaue Orientierung der Stechkanüle und damit eine Drehlage der Stechkanüle, beispielsweise relativ zu dem Nadelträgertransportsystem, so dass nach dem Erfassen sowohl der Längsposition als auch des Drehwinkels der Stechkanüle über die Orientierung der Anschliffläche zu der Null-Position die Stechkanüle passgenau und richtungskonform beispielsweise in eine Spritze eingepasst werden kann.

Es ist daher eine Aufgabe der vorliegenden Erfindung, eine Erfassungsvorrichtung von Drehwinkeln zumindest einer Stechkanüle anzugeben, welche es in besonders einfacher, zeitsparender und kostengünstiger Art und Weise ermöglicht, sowohl einen Drehwinkel einer Anschlifffläche der Stechkanüle als auch eine Position einer Anschlifffläche der Stechkanüle in Bezug auf eine Null-Position innerhalb eines Quadrantenkoordinatensystems zu bestimmen.

Diese Aufgabe wird durch den Gegenstand des Patentanspruches 1 gelöst. Vorteilhafte Ausgestaltungen der Erfindung sind in den abhängigen Ansprüchen beschrieben.

Um nun eine Erfassungsvorrichtung von Drehwinkeln zumindest einer Stechkanüle anzugeben, bei welcher es in besonders einfacher und kostengünstiger Art und Weise ermöglicht ist, sowohl eine Position als auch einen Drehwinkel einer Anschlifffläche der Stechkanüle in Bezug auf eine Null-Position innerhalb eines Quadrantenkoordinatensystems bestimmen zu können, macht die vorliegende Erfindung unter anderem von der Idee Gebrauch, ein Aufnahmesystem bereitzustellen, welches zumindest ein Aufnahmeelement umfasst, welches das von der Anschlifffläche erzeugte Schattenschliffprofil der Anschlifffläche während einer Positionsermittlungssequenz und während eines kontinuierlichen Transportierens der Stechkanüle erfasst und das Aufnahmesystem aus dem erfassten Anschliffprofil die Position und/oder Drehwinkel der Anschlifffläche zu der Null-Position bestimmen kann.

Mit anderen Worten ist es mittels des hier beschriebenen Aufnahmesystems ermöglicht, eine derartige Doppelfunktion, das heißt eine Bestimmung der Position der Stechkanüle und gleichzeitig eine Bestimmung des Drehwinkels der Anschlifffläche der Stechkanüle während eines kontinuierlichen Transportierens der Stechkanüle bestimmen zu können, ohne dass beispielsweise zur Messung die Stechkanüle und damit das gesamte Transportband der Transportvorrichtung angehalten werden müssten, so dass ein Zeitverlust durch das Anhalten vermieden ist. Folglich bietet eine derartige Erfassungsvorrichtung besonders kurze Detektionszeiten und gleichzeitig die "doppelte" Erfassung sowohl der Position als auch des Drehwinkels.

Gemäß der Erfindung, umfasst die Erfassungsvorrichtung zur Erfassung von Drehwinkeln zumindest einer Stechkanüle ein Nadelträgertransportsystem zum Befestigen und Transportieren der Stechkanüle entlang einer Transportrichtung. Zudem umfasst die Erfassungsvorrichtung zumindest ein Aufnahmesystem zum Aufnehmen und Ermitteln einer Position und/oder eines Drehwinkels einer Anschlifffläche der Stechkanüle in Bezug auf eine Null-Position innerhalb eines Quadrantenkoordinatensystems und eine Transportvorrichtung, wobei das Nadelträgertransportsystem entlang der Transportrichtung auf der Transportvorrichtung transportierbar ist und mittels zumindest einer Lichtquelle elektromagnetische Strahlung auf die Stechkanüle lenkbar ist, wobei ein durch die Lichtquelle erzeugtes Schattenschliffprofil der Anschlifffläche auf das Aufnahmesystem trifft und von diesem optisch und/oder elektronisch erfassbar ist. Dabei umfasst das Aufnahmesystem zumindest ein Aufnahmeelement, welches das von der Anschlifffläche erzeugte Schattenschliffprofil der Anschlifffläche während einer Positionsermittlungssequenz und während eines kontinuierlichen Transportierens der Stechkanüle erfasst und das Aufnahmesystem aus dem erfassten Schattenschliffprofil die Position und/oder den Drehwinkel der Anschlifffläche zu der Null-Position bestimmen kann.
Insbesondere kann es sich bei dem Aufnahmeelement um eine Kamera zum Aufnehmen von elektromagnetischer Strahlung in einem Wellenlängenbereich von infraroter Strahlung bis ultravioletter Strahlung handeln. Beispielsweise handelt es sich bei den Aufnahmeelementen dann um Schnellbildkameras, welche eine derart hohe Bildsekundenzahl aufweisen, um möglichst genau die Position und den Drehwinkel bestimmen zu können.

Gemäß der Erfindung, weist die Transportvorrichtung zumindest eine durchgehende Öffnung auf, durch die hindurch elektromagnetische Strahlung der, der Öffnung zugeordneten, Lichtquelle auf die Stechkanüle lenkbar ist.

"Zugeordnet" heißt in diesem Zusammenhang, dass die Lichtquelle an der Transportvorrichtung angeordnet und mit dieser verbunden sein kann oder aber die Lichtquelle von der Transportvorrichtung separat in der Erfassungsvorrichtung positioniert ist.

Gemäß der Erfindung, umfasst das Aufnahmesystem genau ein Aufnahmeelement, wobei zur Bestimmung der Position und/oder des Drehwinkels der Anschlifffläche zu der Null-Position das Aufnahmeelement relativ zur Stechkanüle und/oder zu der Transportvorrichtung, während der Positionsermittlungssequenz des Aufnahmesystems, in seiner Position veränderbar ist oder verändert wird.

Dabei kann es sich bei der "Positionsermittlungssequenz" um eine Bewegungsfolge des Aufnahmeelements und/oder eine Programmsequenz handeln, welche zur Aufnahmesteuerung des Aufnahmesystems ausgebildet ist. Insbesondere kann die Positionsermittlungssequenz ein Positionsermittlungsprogramm und/oder Steuerbefehle zur Positionsverschiebung des Aufnahmesystems und damit des Aufnahmeelementes relativ zur Transportvorrichtung und/oder zur Stechkanüle aufweisen. Insbesondere ist denkbar, dass zur Positionsermittlung das Aufnahmeelement innerhalb des Quadrantenkoordinatensystems zunächst eine vorgebbare Position einnimmt und in dieser vorgebbaren Position während einer vorgebbaren Aufnahmezeit das Schattenschliffprofil der Anschlifffläche aufnimmt und nach Ablauf der ersten Positionsermittlungszeit durch Ansteuerung mittels der Positionsermittlungssequenz das Aufnahmeelement in seiner Position beispielsweise entlang einer Führungsschiene um einen relativ zur Transportvorrichtung vorgebbaren Winkel, beispielsweise 90°, innerhalb oder parallel des Quadrantenkoordinatensystems verlagert wird, um in einer derartige veränderten Position relativ zur Transportvorrichtung und/oder zur Stechkanüle während einer weiteren Positionsermittlungszeit ein entsprechend verändertes Schattenschliffprofil der Anschlifffläche aufzunehmen, um aus beiden, unterschiedlichen, Bildern und/oder Bildsequenzen die Position und/oder die Drehlage der Anschlifffläche der Stechkanüle genau berechnen zu können. Insofern kommt das hier beschriebene Aufnahmesystem mit lediglich einem einzigen Aufnahmeelement, beispielsweise einer Kamera aus, so dass das hier beschriebene Aufnahmesystem ganz besonders kostengünstig und einfach im Aufbau ist.

Gemäß der Erfindung, umfasst das Aufnahmesystem mindestens zwei, insbesondere genau zwei Aufnahmeelemente. Vorzugsweise sind die beiden Aufnahmeelemente, welche entsprechend der oben ausgeführten Kamera ausgebildet sein können, in einem Winkel von 90° innerhalb oder parallel des Quadrantenkoordinatensystems zueinander angeordnet. Grundsätzlich kann die Anschlifffläche der Stechkanüle in einer beliebigen Drehlage von zwischen 0° und 360° innerhalb des Quadrantenkoordinatensystems liegen. Die beiden Kameras sind beispielsweise in dem Winkel von 90° angeordnet und spannen in einem derartigen Fall das Quadrantenkoordinatensystem durch entsprechende optische Längsachsen, welche durch die beiden Aufnahmeelemente hindurchgeführt sind, auf. In einer bevorzugten Variante verlaufen die optischen Längsachsen der jeweiligen Aufnahmeelemente mittig durch die ihnen zugeordneten Quadranten, wobei sich diese jeweiligen Quadranten zu +45° und -45° zur jeweiligen optischen Längsachse des Aufnahmeelements ausbilden. In einer derartigen Ausgestaltung ist es vorstellbar, dass die beiden Kameras gleichzeitig oder zeitlich durch ein vorgebbares Zeitintervall zueinander versetzt, entsprechend ihrer unterschiedlichen Position relativ zur Stechkanüle, das Schattenschliffprofil der Anschlifffläche der Stechkanüle aufnehmen und über ein von der Positionsermittlungssequenz umfasstes Positionsermittlungsprogramm des Aufnahmesystems, das Aufnahmesystem aus den unterschiedlichen Bildern des Schattenschliffprofils eine Position und eine Orientierung der Stechkanüle zu der Null-Position innerhalb des Quadrantenkoordinatensystems berechnen kann. Mit anderen Worten ist durch die beiden Aufnahmeelemente eine positionsgenaue Bestimmung ohne eine Positionsveränderung der Aufnahmeelemente relativ zur Stechkanüle und/oder zur Transportvorrichtung möglich, so dass es denkbar ist, dass beide Aufnahmeelemente statisch fest zur oder mit der Transportvorrichtung verbunden sind. Es ist daher eine besonders einfache Möglichkeit geschaffen, sowohl die Drehlage der Anschlifffläche der Stechkanüle als auch die Position der Anschlifffläche der Stechkanüle innerhalb des Quadrantenkoordinatensystems zu bestimmen, ohne dass die Aufnahmeelemente bewegt werden müssten.

Gemäß zumindest einer Ausführungsform umfasst das Aufnahmesystem eine Verarbeitungseinheit, welche die von den Aufnahmeelementen aufgenommenen optischen Signale verarbeitet und darauf Drehwinkel und/oder die Position der Anschlifffläche relativ zu der Null-Position berechnet. Dazu werden in die Verarbeitungseinheit die Messsignale der Aufnahmeelemente eingespeist, wodurch über ein Verarbeitungsprogramm, welches die Messsignale koordiniert und miteinander verrechnet und/oder abgleicht, auf die Position und/oder den Drehwinkel der Anschlifffläche der Stechkanüle zurückgerechnet wird, um möglichst einfach mittels der Verarbeitungseinheit derartige Positions- und Drehwinkelbestimmungen durchführen zu können.

Gemäß zumindest einer Ausführungsform ist mittels des von der Anschlifffläche generierten Schattenschliffprofils durch die Verarbeitungseinheit eine Position und/oder Drehlage der Anschlifffläche in zumindest zwei Quadranten des durch die Aufnahmeelemente und/oder die Lichtquellen aufgespannten Quadrantenkoordinatensystems bestimmbar, wobei durch die Verarbeitungseinheit über die Positionsermittlungssequenz zum individuellen Ansteuern der Aufnahmeelemente die Position und/oder der Drehwinkel der Anschlifffläche zu der Null-Position innerhalb der beiden verbleibenden Quadranten bestimmbar ist. Denkbar ist in diesem Zusammenhang, dass ein erstes Aufnahmeelement eine Grundorientierung der Anschliffläche zu der Null-Position in zumindest einem Quadranten bestimmt. "Grundorientierung" ist eine Orientierungsangabe, die dahingehend definiert sein kann, dass eines der beiden Aufnahmeelemente die Drehlage der Stechkanüle erfasst, falls diese beispielsweise im Bereich von +45° bis -45° oder +135° bis -135° gegenüber der optischen Längsachse des Aufnahmeelements, beispielsweise einer Kamera, also im ersten oder im dritten Quadranten, liegt. Die zweite Kamera erfasst dann eine Position der Stechkanüle und/oder der Anschlifffläche in Bezug auf diese Null-Position. Mit anderen Worten kann das zweite Aufnahmeelement in diesem Fall die Position (d.h. die Längslage) in den fraglichen Quadranten bestimmen (also ob die Drehrichtung des Schliffs nur im ersten Quadranten im Bereich von entweder ±45° oder nur im Bereich von ±135° liegen kann), wobei mittels einer derartigen Aufgabenverteilung die Drehlage und die Position zumindest in einem Quadranten, vorzugsweise jedoch in zwei Quadranten des Quadrantenkoordinatensystems bestimmbar ist und die Positionsermittlungssequenz derart ausgestaltet ist, dass mittels der individuellen Ansteuerung der Aufnahmeelemente die Drehlage und/oder die Position der Anschlifffläche der Stechkanüle in den beiden anderen Quadranten berechenbar und/oder extrapolierbar ist. Dies kann wiederum über ein Positionsermittlungsprogramm erreicht werden, mittels dessen über eine optisch genaue Bestimmung lediglich in einem Quadranten und/oder in zwei Quadranten des Quadrantenkoordinatensystems ebenso auf die entsprechende Drehlage der Stechkanüle und/oder der Position der Anschlifffläche der Stechkanüle in den beiden anderen Quadranten geschlossen werden kann. Mit anderen Worten ist durch die Positionsermittlungssequenz ein "Rollentausch" der beiden Aufgaben der beiden Aufnahmeelemente (Bestimmung der Position und der Drehlage) ermöglicht .Ein derartige "Rollentausch" kann insbesondere deshalb nötig sein, da bei einer Drehlage aus Sicht des ersten Aufnahmeelements außerhalb von ±45° oder ±135° zu seiner optischen Achse die geometrischen Änderungen im Schattenschliffprofil so gering sind, dass ein Tausch der Funktionen notwendig wird. Ist nun die Drehlage aus Sicht des ersten Aufnahmeelements bezogen auf dessen optische Achse außerhalb von ±45° oder ±135° übernimmt das erste Aufnahmeelement, beispielsweise unmittelbar, die Erfassung der Position der Anschlifffläche in den fraglichen Quadranten. Die zweite Kamera übernimmt stattdessen nun die Erfassung der Drehlage im Bereich zwischen -45° bis -135° und +45° bis +135° (hier jeweils Gradabweichung immer noch gegenüber der optischen Längsachse des ersten Aufnahmeelements).

Gemäß zumindest einer Ausführungsform vertauschen zur Erkennung der Position und/oder des Drehwinkels in den beiden verbleibenden Quadranten die beiden Aufnahmeelemente ihre beiden Aufgaben im Hinblick auf eine Grundorientierung und eine Bestimmung der Position und/oder eines Drehwinkels der Anschlifffläche relativ zu den Lichtquellen und/oder der Null-Position mittels einer Umschaltung durch die Positionsermittlungssequenz. Insofern wird es durch eine derartige Umschaltung und eine damit einhergehende Aufgabenumverteilung oder einen Aufgabentausch ermöglicht, beispielsweise aus der bereits vorher durchgeführten Bestimmung eines möglichen Drehwinkels in zwei Quadranten, mittels eines imaginären und rechnerischen Tausches der Aufgaben der beiden Aufnahmeelemente die beiden fehlenden Quadranten und insbesondere den Drehwinkel und die Position innerhalb der beiden fehlenden Quadranten bestimmen zu können. "Imaginärer" Tausch ist in diesem Zusammenhang ein gedachter, auf Basis eines Positionsermittlungsprogrammes durchgeführter (Koordinaten) Tausch, so dass über den Tausch möglichst genau die Position und/oder der Drehwinkel der Anschlifffläche der Stechkanüle in allen vier Quadranten errechenbar sind.

Gemäß zumindest einer Ausführungsform ist eine Transportgeschwindigkeit der Stechkanüle entlang der Transportvorrichtung wenigstens zwischen 400 mm/s und 600 mm/s. Eine derartige Transportgeschwindigkeit wird insbesondere durch das bereits obig erwähnte Aufnahmesystem und die das Aufnahmesystem steuernde Positionsermittlungssequenz erreicht. Insbesondere wird es nämlich, wie bereits eingangs erwähnt, in vorliegender Erfindung ermöglicht, dass es sich bei dem Transport um einen "kontinuierlichen" Transport handelt, so dass ein Absetzen und ein damit einhergehendes Stehenbleiben der Stechkanüle beispielsweise unterhalb eines Kamerasystems vermieden wird. Insofern wird es ermöglicht, dass besonders hohe Transportgeschwindigkeiten erzielt werden können, so dass eine Durchlaufrate mittels der hier beschriebenen Erfassungsvorrichtung besonders hoch ausgestaltet ist und damit wiederum auf besonders einfache Art und Weise eine Kostenersparnis herbeiführbar ist.

Gemäß zumindest einer Ausführungsform umfasst die Erfassungsvorrichtung zumindest einen Blitzcontroller, mittels dessen Bilder durch das Aufnahmeelement aufgenommen werden. Insbesondere kann der Blitzcontroller auf die Transportgeschwindigkeit und/oder die konkrete Lage und/oder Position der Stechkanüle und dabei insbesondere der Anschlifffläche der Stechkanüle eingerichtet und davon abhängig gemacht sein. Dazu ist es denkbar, dass der Blitzcontroller dann einen Blitz erzeugt, wenn die Stechkanüle über der Öffnung erscheint, so dass in diesem Moment mittels des erzeugten Blitzes die Bilder durch die Elemente, welche beispielsweise Kameras sein können, besonders deutlich und akzentuiert aufnehmbar sind.

Gemäß zumindest einer Ausführungsform ist das Aufnahmesystem dazu eingerichtet und dazu vorgesehen, den Drehwinkel der Anschlifffläche relativ zu der Null-Position innerhalb eines Toleranzbereiches von einschließlich einem Betragswert von 5 Winkelgraden zu bestimmen. Dabei ist der Toleranzbereich derjenige Bereich in Winkelgraden gemessen, welcher von einem tatsächlichen Drehwinkel der Anschlifffläche der Stechkanüle abweicht, jedoch ohne dass innerhalb des Toleranzbereiches über einen derartigen Messfehler intolerable Auswirkungen im Hinblick auf eine derartige Messungsgenauigkeit entstehen würden. Insbesondere ist mittels eines derartigen Toleranzbereiches sichergestellt, dass Stechkanülen beispielsweise in Spritzensysteme in ihrer vorgesehenen Orientierung besonders einfach und sicher eingebaut werden können.

Gemäß zumindest einer Ausführungsform ist das Aufnahmesystem dazu eingerichtet und dazu vorgesehen, die Position der Anschlifffläche zu der Null-Position innerhalb eines Toleranzbereiches von einschließlich einem Betragswert von 0,05 mm zu bestimmen. Auch mittels eines derartigen Toleranzbereiches im Rahmen einer Bestimmung einer Längslage wird gewährleistet, dass beispielsweise ein späteres Einführen in einen Spritzenkörper ohne mechanische Beschädigungen und in einer gewünschten Tiefe in einem solchen Spritzenkörper, erfolgen kann.

Gemäß zumindest einer Ausführungsform ist das Aufnahmesystem dazu eingerichtet und dazu vorgesehen, eine Längenmessung der Stechkanüle vorzunehmen. Insbesondere kann zur Längenmessung der Stechkanüle die Positionsermittlungssequenz zusätzlich ein Längenmessprogramm umfassen, welches das Aufnahmesystem, beispielsweise die Kameras, derart ansteuert und/oder von den Kameras aufgenommene Bilder derart verarbeitet, dass eine absolute Länge der Stechkanülen neben der Bestimmung des Drehwinkels der Anschlifffläche und der Position der Anschlifffläche der Stechkanüle ebenso möglich ist. Insofern ist besonders einfach eine Erfassungsvorrichtung realisiert, welche alle drei Aufgaben innerhalb einer einzigen Positionsermittlungssequenz erfüllen kann.

Im Folgenden wird die hier beschriebene Erfassungsvorrichtung anhand eines Ausführungsbeispiels und den dazugehörigen Figuren näher erläutert.

Die Figuren 1A bis 1D zeigen in schematisch perspektivischen Ansichten ein Ausführungsbeispiel einer hier beschriebenen Erfassungsvorrichtung.

Die Figuren 2A bis 2B zeigen in schematisch perspektivischen Ansichten ein Ausführungsbeispiel einer hier beschriebenen Stechkanüle.

Die Figur 3 zeigt in einer schematisch perspektivischen Draufsicht ein hier beschriebenes Quadrantenkoordinatensystem sowie eine Anordnung einer Stechkanüle innnerhalb dieses Quadrantenkoordinatensystems.

In den Ausführungsbeispielen und den Figuren sind gleiche oder gleichwirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

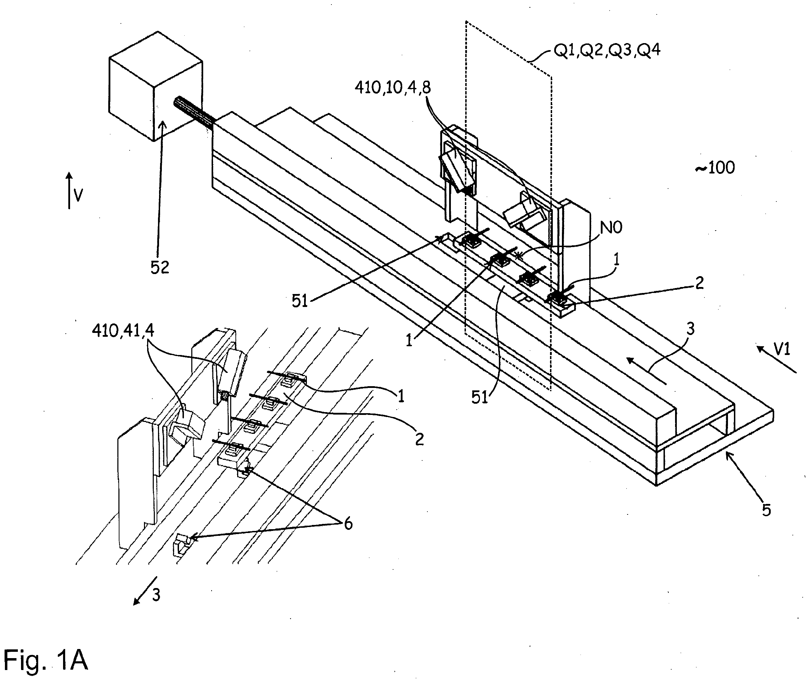

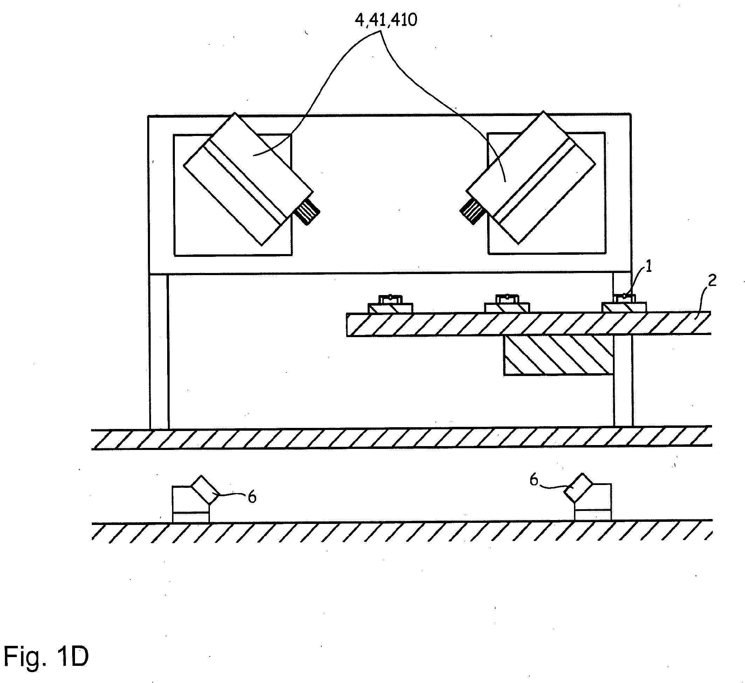

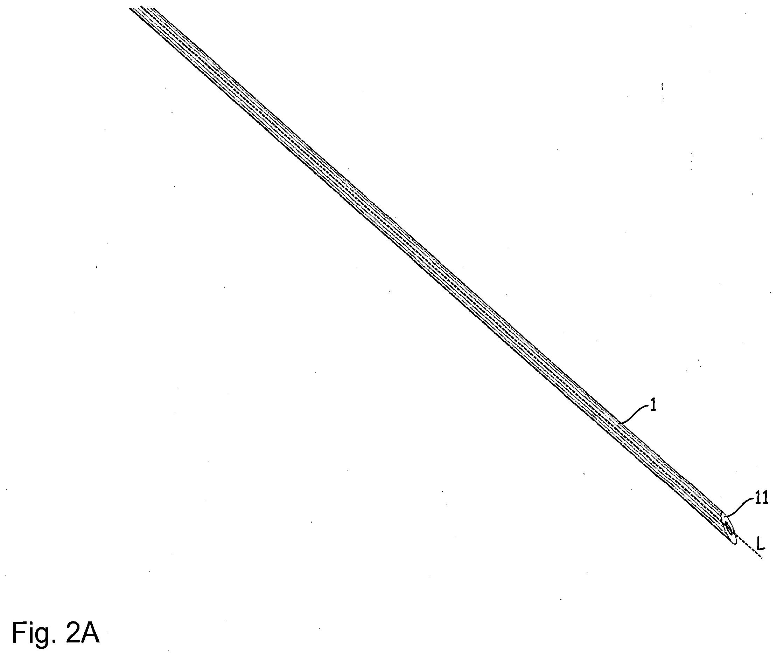

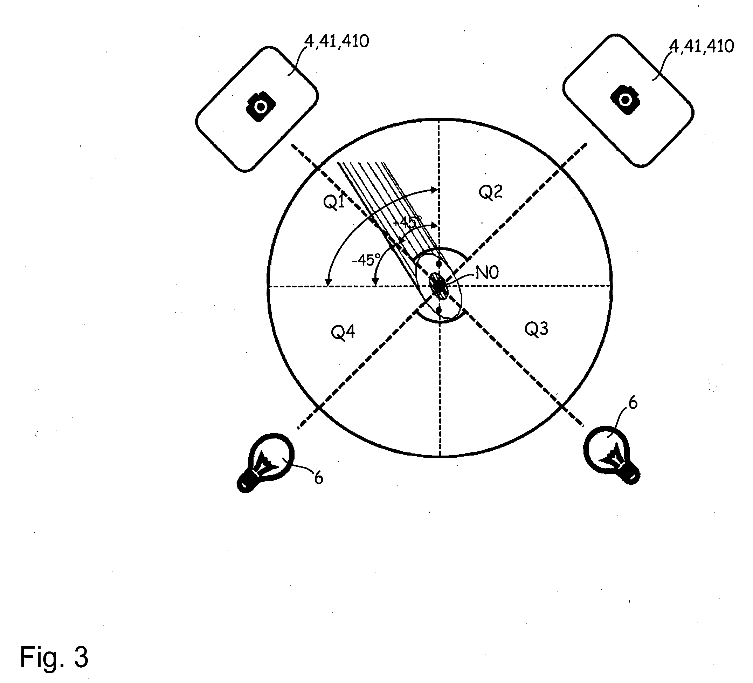

In der Figur 1A ist anhand einer schematisch perspektivischen Ansicht ein Ausführungsbeispiel einer hier beschriebenen Erfassungsvorrichtung 100 zum Erfassen von Drehwinkeln von Stechkanülen 1 gezeigt. Die Erfassungsvorrichtung 100 umfasst ein Nadelträgertransportsystem 2 zum Befestigen und Transportieren der Stechkanülen 1 entlang einer Transportrichtung 3. Dabei werden die Stechkanülen 1, welche an dem Nadelträgertransportsystem 2 befestigt sind, über einen Antriebsmotor 52 entlang einer Transportvorrichtung 5 in der Transportrichtung 3 geschoben oder gezogen, jedenfalls bewegt. Darüber hinaus ist aus der Figur 1A erkennbar, dass die Erfassungsvorrichtung 100 ein Aufnahmesystem 4 zum Aufnehmen und Ermitteln einer Position und/oder eines Drehwinkels einer Anschlifffläche 11 der Stechkanüle 1 (siehe Figuren 2A bis 2B) in Bezug auf eine Null-Position N0 innerhalb eines Quadrantenkoordinatensystems Q1 bis Q4 (siehe Figur 3) umfasst. Dabei ist das Quadrantenkoordinatensystem Q1 bis Q4 durch eine gestrichelt dargestellte Ebene dargestellt, welche parallel zur Transportrichtung 3 verläuft. Mit anderen Worten liegen das Quadrantenkoordinatensystem Q1 bis Q4 und eine Haupterstreckungsebene der Transportvorrichtung 5 der Erfassungsvorrichtung 100 senkrecht zueinander. Dabei weist die Transportvorrichtung 5 in dem Ausführungsbeispiel gemäß der Figur 1A zwei Öffnungen 51 auf, so dass eine unterhalb der Öffnungen 51 oder im Bereich unterhalb der Öffnung 51 angeordnete Lichtquellen 6 (verdeckt durch die Transportvorrichtung 5 der Figur 1A) angeordnet sind. Vorliegend ist das Aufnahmesystem 4 durch zwei Aufnahmeelemente 41 gebildet, welche jeweils in Form einer Kamera 410 zum Aufnehmen von elektromagnetischer Strahlung in einem Wellenlängenbereich von infraroter Strahlung bis ultravioletter Strahlung ausgeführt sind. Dazu sind die beiden Aufnahmeelemente 41 in vertikaler Richtung V über dem Nadelträgertransportsystem 2 und damit über den Stechkanülen 1 angeordnet, so dass elektromagnetische Strahlung, beispielsweise sichtbares Licht, ausgehend von den Lichtquellen 6 durch die Öffnungen 51 hindurch zumindest teilweise auf die Stechkanüle 1 fällt und auf die Kameras 410, welche zumindest zeitweise auf die jeweilige Stechkanüle 1 gerichtet sind, ein Schattenschliffprofil der Anschlifffläche 11 der jeweiligen Stechkanüle 1 trifft. Dabei kann die Null-Position N0 als ein Punkt, beispielsweise als ein Nullpunkt in einem kartesischen Koordinatensystem innerhalb des Quadrantenkoordinatensystems Q1 bis Q4 festgelegt werden, so dass die Stechkanülen 1 relativ zu dieser in dem Quadrantenkoordinatensystem Q1 bis Q4 liegenden Null-Position NO, welche vorgebbar festlegbar ist, verschoben sind.

Insofern kann mittels des in der Figur 1A beschriebenen Aufnahmesystems 4 das von der Anschlifffläche 11 erzeugte Schattenschliffprofil während einer Positionsermittlungssequenz und während eines kontinuierlichen Transportierens der Stechkanülen 1 jeweils erfasst werden, wobei das Aufnahmesystem 4 aus dem erfassten Schattenschliffprofil die Position und/oder den Drehwinkel der Anschlifffläche 11 zu der Null-Position N0 bestimmen kann. Zur Ermittlung eines Drehwinkels der Anschlifffläche 11 und der Position der Anschlifffläche 11 zu der Null-Position umfasst das Aufnahmesystem 4 eine Verarbeitungseinheit 8, welche die von den Aufnahmeelementen 41 aufgenommenen optischen Signale verarbeitet und daraus den Drehwinkel und/oder die Position der Anschlifffläche 11 relativ zu der Null-Position N0 berechnet. Insbesondere werden in dem Ausführungsbeispiel gemäß der Figur 1A in einem ersten Verarbeitungsschritt mittels eines Blitzcontrollers 10 Bilder der beiden Kameras 410 aufgenommen und über die Positionsermittlungssequenz und ein Verarbeitungsprogramm der Verarbeitungseinheit ausgewertet.

Im Ausführungsbeispiel gemäß der Figur 1A sind die beiden Kameras 410 innerhalb des Quadrantenkoordinatensystems Q1 bis Q4 angeordnet und können dieses aufspannen. Mittels einer derartigen 90°-Anordnung ist daher ein Quadrantenkoordinatensystem nach Art eines karthesischen Koordinatensystems gebildet. Die Null-Position kann daher diejenige Position sein, in der ein Mittelpunkt der Anschlifffläche 11 innerhalb der Ebene des Quadrantenkoordinatensystems Q1 bis Q4 liegt. Beispielsweise kann dabei ein Flächenlot der Anschlifffläche 11der Stechkanüle 1 in eine der Kameras 410 direkt durch diese und parallel zu einer optischen Achse der Kamera 410 hindurchverläuft. Das Flächenlot der Anschlifffläche 11 kann jedoch auch in einem vorgebbaren Winkel zu der optischen Achse der Kamera 410 ausgerichtet sein. Eine Abweichung von einer derartigen lotrechten Anordnung der Anschlifffläche 11 wird dann durch die Kameras 410 und damit ebenso durch die Aufnahmeelemente 41 registriert und der Verarbeitungseinheit 8 zugeführt und von dieser verarbeitet. Dabei kann eine der beiden Kameras 410 eine Grundorientierung der Anschlifffläche 11 zu der Null-Position und/oder zu dieser Kamera 410, und insbesondere zu deren optischen Achse, und die jeweils andere Kamera 410 eine Position und/oder einen Drehwinkel der Anschlifffläche 11 zu dieser Kamera 410 und/oder zu der Null-Position N0 über das Einfangen des Schattenschliffprofils erfassen. Eine derartige Bestimmung gibt jedoch nur Aufschluss über die Orientierung der Stechkanüle 1 und insbesondere der Anschlifffläche 11 der Stechkanüle 1 innerhalb höchstens zweier Quadranten, beispielsweise des ersten Quadranten Q1 und des zweiten Quadranten Q2 oder des dritten Quadranten Q3. Über einen Vertausch der Aufgaben der beiden Aufnahmeelemente 41, beispielsweise initiiert durch die Positionsermittlungssequenz, wird über ein eventuell zusätzlich in der Verarbeitungseinheit 8 eingespeichertes Verarbeitungsprogramm mittels eines imaginären und rechnerischen Tausches, beispielsweise auch in den Koordinaten (x-Koordinate geht nach -x-Koordinate; y-Koordinate geht nach -y-Koordinate oder auch jeweils komplex konjungiert), die Position der Anschlifffläche 11 der Stechkanüle 1 und ebenso der Drehwinkel der Anschlifffläche 11 der Stechkanüle 1 in den beiden verbleibenden Quadranten Q2 oder Q3 und Q4 errechnet.

Insofern ist eine "360°-Messung" zur Orientierung der Anschlifffläche 11 der Stechkanüle 1 innerhalb des gesamten Quadrantenkoordinatensystems Q1-Q4 geschaffen. Das hierbei vorgestellte Verfahren ermöglicht über diesen "Rollentausch" der beiden Aufnahmeelemente 41, welche vorliegend in Form zweier Kameras 410 ausgebildet sind, eine Verwendung von lediglich zwei Kameras zur Ermittlung eines Drehwinkels und einer Position zu der Null-Position in dem Quadrantenkoordinatensystem Q1 bis Q4.

Die Transportgeschwindigkeit V1 der Stechkanülen 1 entlang der Transportrichtung 3 beträgt wenigstens 400 mm/s und höchstens 600mm/s, beispielsweise 500 mm/s, wobei das Aufnahmesystem dazu eingerichtet und dazu vorgesehen ist, den Drehwinkel der Anschlifffläche 11 relativ zu der Null-Position N0 innerhalb einer Toleranzbereiches von einem Betragswert von einschließlich 5 Winkelgraden und die Position zu der Null-Position N0 innerhalb eines Toleranzbereiches von einschließlich einem Betragswert von einschließlich 0,05 mm, das heißt einen betragsmäßigen Abstand entlang einer lotrechten Verbindungslinie zu dem Quadrantenkoordinatensystem Q1 bis Q4 bestimmbar ist. Darüber hinaus ist die in den oben genannten Figuren dargestellte Erfassungsvorrichtung 100 in der Lage, eine Längenmessung der Stechkanüle 1 vorzunehmen, so dass mittels der hier beschriebenen Erfassungsvorrichtung 100 es in besonders einfacher Weise ermöglicht ist, alle drei für die weitere Verarbeitung relevanten Positions- und Abmaßparameter, das heißt einen Drehwinkel, eine Position und eine absolute Längenmessung der Stechkanüle 1 zu bestimmen. Insofern wird es mittels der hier beschriebenen Erfassungsvorrichtung 100 ermöglicht, dass nach dem Erfassen der oben beschriebenen Parameter der Stechkanüle 1 besonders einfach, betriebssicher und kostengünstig beispielsweise in eine Spritze oder ein sonstiges Injektionselement eingesetzt werden kann.

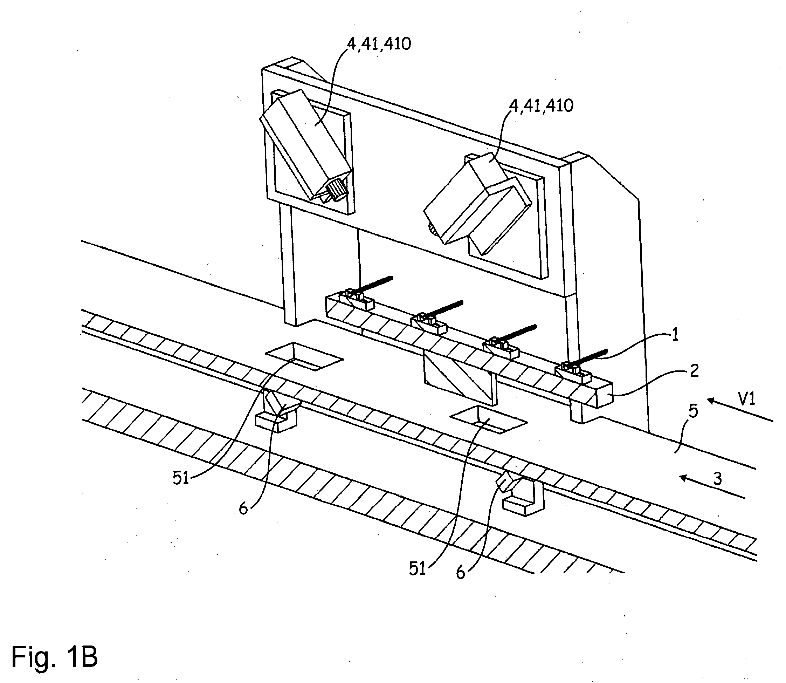

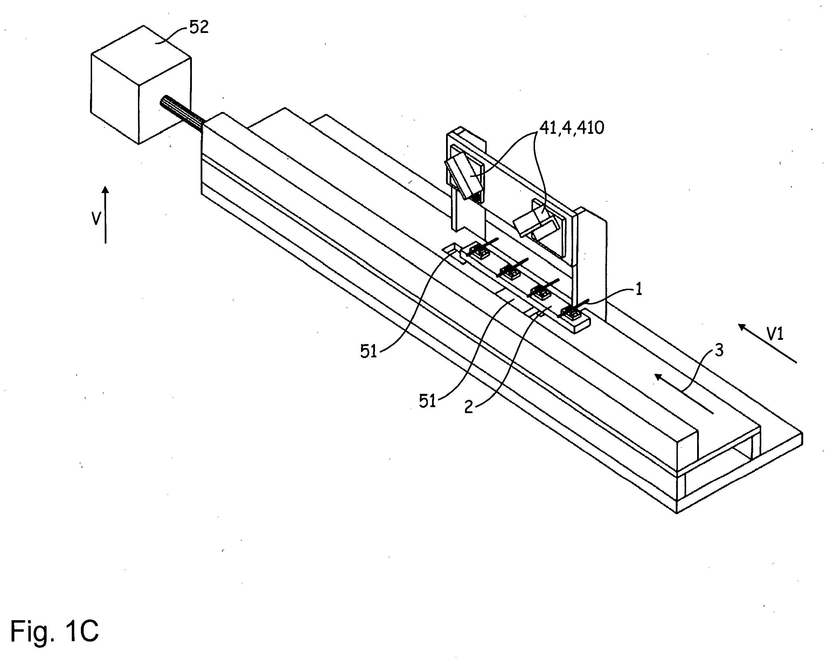

Die Figur 1B zeigt in einer weiteren schematisch perspektivischen Ansicht der Erfassungsvorrichtung 100 der Figur 1A nochmals deutlicher insbesondere die beiden Öffnungen 51, welche entlang der Transportrichtung 3 in die Transportvorrichtung 5 eingebracht sind und durch welche hindurch die elektromagnetische Strahlung, beispielsweise sichtbares Licht, hindurchgeht und auf die Stechkanülen 1 trifft, wodurch ein in die Kameras 410 fallendes Schattenschliffprofil der Anschlifffläche 11 erzeugt wird. Die Figuren 1C bis 1D zeigen in weiteren schematisch perspektivischen Ansichten die bereits in den Figuren 1A bis 1B gezeigte Erfassungsvorrichtung 100.

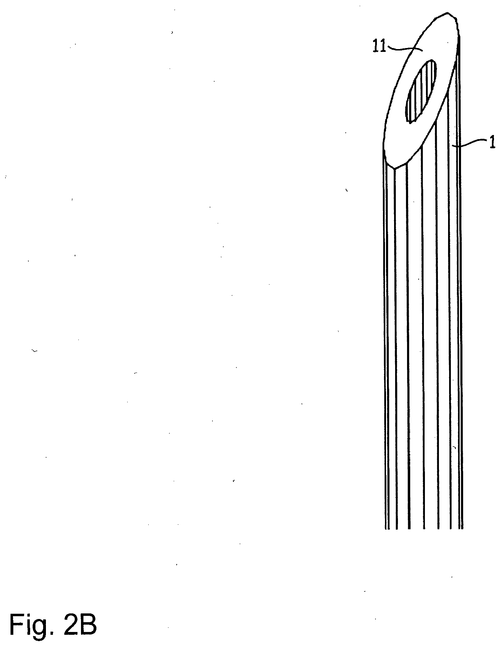

In den Figuren 2A und 2B ist in einer schematisch perspektivischen Ansicht ein Ausführungsbeispiel einer hier beschriebenen Stechkanüle 1 aufweisend die hier beschriebene Anschlifffläche 11 gezeigt, wobei in vorliegendem Ausführungsbeispiel besonders einfach erkennbar ist, dass die Anschlifffläche 11 zu einer Längsachse L der Stechkanüle 1 in einem vorgebbaren Winkel angeschrägt orientiert ist.

Dabei ist in dem Ausführungsbeispiel gemäß den Figuren 2A bis 2B die Stechkanüle 1 als eine Vollkanüle in Form einer Stahlkanüle ausgebildet, mit einem Außendurchmesser von wenigstens 0,2 mm bis 0,4 mm, beispielsweise 0,3 mm, und einem Innendurchmesser von wenigstens 0,1 mm bis höchstens 0,25 mm, beispielsweise 0,14 mm, wobei stirnseitig die Anschlifffläche 11 in Form eines "single-cut-Schliffs" und einer Anwinkelung zur Längsachse L von 30° erkennbar ist. Die Anwinkelung kann in einem Bereich von wenigstens 20° und höchstens 40° ausgebildet sein. Mittels der hier beschriebenen Anschlifffläche 11 können daher, wie im Zusammenhang mit der Figur 1A beschrieben, ein Drehwinkel und eine Position der Stechkanülen 1 innerhalb des Quadrantenkoordinatensystems Q1 bis Q4 und/oder zu dem Quadrantenkoordinatensystem Q1 bis Q4 bestimmt werden, welche in das Nadelträgertransportsystem 2 horizontal aufgenommen sein können und beispielsweise über Federbacken eingeklemmt sind.

Die Figur 3 zeigt in einer schematisch perspektivischen Draufsicht das hier beschriebene Quadrantenkoordinatensystem Q1 bis Q4, innerhalb dessen und/oder zu dem die Anschlifffläche 11 der Stechkanüle 1 orientiert angeordnet ist. Dabei ist besonders einfach erkennbar, dass sowohl die beiden Lichtquellen 6 als auch die beiden Aufnahmeelemente 41 jeweils in einem Winkel von 90° zueinander eingespannt sind und jeweils ein Aufnahmeelement 41 eindeutig einer Lichtquelle 6 zugeordnet ist. Insofern liegt das jeweils einer Lichtquelle 6 zugeordnete Aufnahmeelement 41 auf einer optischen Achse, insbesondere einer Hauptabstrahlungsachse, der jeweiligen Lichtquelle 6. Die optischen Längsachsen der jeweiligen Aufnahmeelemente 41 verlaufen mittig durch den ihnen zugeordneten Quadranten, wobei sich diese jeweiligen Quadranten zu +45° und -45° zur jeweiligen optischen Längsachse des Aufnahmeelements 41 ausbilden. Über eine derartige 90°-Anordnung ist das Quadrantenkoordinatensystem Q1 bis Q4 aufgespannt, so dass mittels der obig beschriebenen Positionsansteuersequenz und dem "Rollentausch" der beiden Aufnahmeelemente 41 eine eindeutige Positionsbestimmung zu der Nullposition N0 in allen vier Quadranten Q1 bis Q4 des Quadrantenkoordinatensystems Q1 bis Q4 ermöglicht wird.

Insofern ist ein besonders kostengünstiges und zeitsparendes Verfahren geschaffen, mittels dessen durch die Benutzung von beispielsweise lediglich zwei Aufnahmeelementen 41, welche insbesondere in Form einer Kamera 410 ausgeführt sein können, bereits eine eindeutige Positionsbestimmung beispielsweise über die hier beschriebene Verarbeitungseinheit 8 ermöglicht wird.

Denkbar ist jedoch auch alternativ dazu, jedoch nicht erfindungsgemäß, eine eindeutige Positionsbestimmung und/oder eine Bestimmung des Drehwinkels der Anschlifffläche 11 zu der Null-Position N0 mittels nunmehr einem einzigem Aufnahmeelement 41 beispielsweise in Form einer Kamera 410, welche während und zur Durchführung der Positionsermittlungssequenz relativ beispielsweise zu der Transportvorrichtung 5 bewegt wird und über einen derartigen Positionswechsel dieser einzigen Kamera 410 eine "zweite" Kamera, welche in einem derartigen Ausführungsbeispiel nicht notwendig ist und auf diese auch vollständig verzichtet, ersetzt wird.

In einer derartigen Ausführungsform ist ein alternatives, jedoch nicht erfindungsgemäßes, und ebenso einfach aufgebautes und kostengünstiges Verfahren zur Positionsbestimmung bereitgestellt.
Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet.

### Bezugszeichenliste

- Q1: Quadrantenkoordinatensystem
- Q2: Quadrantenkoordinatensystem
- Q3: Quadrantenkoordinatensystem
- Q4: Quadrantenkoordinatensystem
- V: vertikale Richtung V
- V1: Transportgeschwindigkeit V1
- N0: Null-Position
- 1: Stechkanüle
- 2: Nadelträgertransportsystem
- 3: Transportrichtung
- 4: Aufnahmesystem
- 5: Transportvorrichtung
- 6: Lichtquelle
- 8: Verarbeitungseinheit
- 10: Blitzcontroller
- 11: Anschlifffläche
- 41: Aufnahmeelemente
- 51: Öffnung
- 52: Antriebsmotor
- 100: Erfassungsvorrichtung
- 410: Kameras
- L: Längsachse

## Patentansprüche

1. Erfassungsvorrichtung (100) zur Erfassung von Drehwinkeln zumindest einer Stechkanüle (1), umfassend ein Nadelträgerstransportsystem (2) zum Transportieren der Stechkanüle (1) entlang einer Transportrichtung (3);
zumindest ein Aufnahmesystem (4), zum Aufnehmen und Ermitteln einer Position und eines Drehwinkels einer Anschlifffläche (11) der Stechkanüle (1) in Bezug auf eine Null-Position (N0) innerhalb eines Quadrantenkoordinatensystems (Q1-Q4); eine Transportvorrichtung (5), wobei das Nadelträgertransportsystem (2) entlang der Transportrichtung (3) auf der Transportvorrichtung (5) transportierbar ist, sowie umfassend zumindest zwei Lichtquellen (6), wobei
mittels der zumindest zwei Lichtquellen (6) elektromagnetische Strahlung auf die Stechkanüle (1) lenkbar sind, wobei ein durch die Lichtquelle (6) erzeugtes Schattenschliffprofil der Anschlifffläche (1) auf das Aufnahmesystem (4) trifft und von diesem optisch und/oder elektronisch erfassbar ist,
**dadurch gekennzeichnet, dass**
das Aufnahmesystem (4) mindestens zwei, insbesondere genau zwei Aufnahmeelemente (41) umfasst, welche dazu eingerichtet sind das von der Anschlifffläche (11) erzeugte Schattenschliffprofil der Anschlifffläche (11) während einer Positionsermittlungssequenz und während eines kontinuierlichen Transportierens, entlang der Transportrichtung (3), der in dem Nadelträgertransportsystem (2) weiterhin angeordneten Stechkanüle (1) zu erfassen und das Aufnahmesystem (4) aus dem erfassten Schattenschliffprofil, die Position und den Drehwinkel, der Anschlifffläche (11) zu der Null-Position (N0) zu bestimmen, wobei die beiden Aufnahmeelemente in einem Winkel von 90° innerhalb, oder parallel des Quadrantenkoordinatensystems zueinander angeordnet sind und spannen in einem derartigen Fall das Quadrantenkoordinatensystem (Q1-Q4) durch entsprechende optische Längsachsen, welche durch die beiden Aufnahmeelemente hindurchgeführt sind, auf, wobei die Transportvorrichtung (5) zumindest eine durchgehende Öffnung (51) aufweist, durch die hindurch elektromagnetische Strahlung der, der Öffnung (51) zugeordneten, Lichtquelle (6) auf die Stechkanüle (1) lenkbar ist.

2. Erfassungsvorrichtung (100) nach Anspruch 1,
**dadurch gekennzeichnet, dass** zur Bestimmung der Position und/oder des Drehwinkels der Anschlifffläche (11) zu der Null-Position (N0) die Aufnahmeelemente (41) relativ zur Stechkanüle (1) und/oder zu der Transportvorrichtung (5), während der Positionsermittlungssequenz des Aufnahmesystems (4), in ihrer Position veränderbar sind oder verändert werden.

3. Erfassungsvorrichtung (100) nach zumindest einem der vorhergehenden Ansprüche,
**dadurch gekennzeichnet, dass**
das Aufnahmesystem (4) eine Verarbeitungseinheit (8) aufweist, welche die von den Aufnahmeelementen (41) aufgenommenen optischen Signale verarbeitet und daraus den Drehwinkel und/oder die Position der Anschlifffläche (11) relativ zu der Null-Position (N0) berechnet.

4. Erfassungsvorrichtung (100) nach dem vorhergehenden Anspruch,
**dadurch gekennzeichnet, dass**
mittels des von der Anschlifffläche (11) generierten Schattenschliffprofils durch die Verarbeitungseinheit (8) eine Drehlage und/oder Position der Anschlifffläche (11) in zumindest zwei Quadraten (Q1, Q3) des durch die Aufnahmeelemente (41) und/oder die Lichtquellen (6) aufgespannten Quadrantenkoordinatensystems (Q1-Q4) bestimmbar ist, wobei durch die Verarbeitungseinheit (8) über die Positionsermittlungssequenz zum individuellen Ansteuern der Aufnahmeelemente (41) die Position und/oder der Drehwinkel der Anschlifffläche (11) zu der Null-Position (N0) innerhalb der beiden verbleibende Quadranten (Q2, Q4) bestimmbar ist.

5. Erfassungsvorrichtung (100) nach zumindest einem der vorhergehenden Ansprüche,
**dadurch gekennzeichnet, dass**
zur einer Erkennung der Position und/oder des Drehwinkels in den beiden verbleibenden Quadranten (Q2, Q4) die beiden Aufnahmeelemente (41) ihre beiden Aufgaben im Hinblick auf eine Drehlagenbestimmung und eine Bestimmung der Position der Anschlifffläche (11) relativ zu den Lichtquellen (6) und/oder der Nullposition (N0) mittels einer Umschaltung durch die Positionsermittlungssequenz (91) vertauschen.

6. Erfassungsvorrichtung (100) nach zumindest einem der vorhergehenden Ansprüche,
**dadurch gekennzeichnet, dass**
eine Transportgeschwindigkeit (V1) der Stechkanüle (1) entlang der Transportrichtung (3) wenigstens 400 mm/s und höchstens 600 mm/s beträgt.

7. Erfassungsvorrichtung (100) nach zumindest einem der vorhergehenden Ansprüche,
**dadurch gekennzeichnet, dass**
mittels zumindest eines Blitzcontrollers (10) Bilder durch die Aufnahmeelemente (41) aufgenommen werden.

8. Erfassungsvorrichtung (100) nach zumindest einem der vorhergehenden Ansprüche,
**dadurch gekennzeichnet, dass**
das Aufnahmesystem (4) dazu eingerichtet und dazu vorgesehen ist, den Drehwinkel der Anschlifffläche (11) relativ zu der Null-Position (N0) innerhalb eines Toleranzbereichs von einschließlich einem Betragswert von 5 Winkelgraden zu bestimmen.

9. Erfassungsvorrichtung (100) nach zumindest einem der vorhergehenden Ansprüche,
**dadurch gekennzeichnet, dass**
das Aufnahmesystem (4) dazu eingerichtet und dazu vorgesehen ist, die Position Anschlifffläche (1) zu der Null-Position (N0) innerhalb eines Toleranzbereichs von einschließlich einem Betragswert von 0,05 mm zu bestimmen.

10. Erfassungsvorrichtung nach zumindest einem der vorhergehenden Ansprüche, **dadurch gekennzeichnet, dass**
das Aufnahmesystem (4) dazu eingerichtet und dazu vorgesehen ist, eine Längenmessung der Stechkanüle (1) vorzunehmen.

## Claims

1. Recording device (100) for recording rotation angles of at least one puncture cannula (1), comprising a needle carrier transport system (2) for transporting the puncture cannula (1) along a transport direction (3);
at least one recording system (4) for recording and determining a position and a rotation angle of a bevel surface (11) of the puncture cannula (1) with respect to a zero position (N0) within a quadrant coordinate system (Q1-Q4);
a transport device (5), it being possible to transport the needle carrier transport system (2) along the transport direction (3) on the transport device (5), and comprising at least two light sources (6),
it being possible for electromagnetic radiation to be deflected onto the puncture cannula (1) by means of the at least two light sources (6), a shadow bevel profile of the bevel surface (1), which profile is produced by the light source (6), striking the recording system (4) and being optically and/or electronically recordable thereby, **characterised in that**
the recording system (4) comprises at least two, in particular exactly two, recording elements (41) which are designed to recording the shadow bevel profile of the bevel surface (11), which profile is produced by the bevel surface (11), during a position-determination sequence and during continuous transportation, along the transport direction (3), of the puncture cannula (1) further arranged in the needle carrier transport system (2), and the recording system (4) determines the position and rotation angle of the bevel surface (11) with respect to the zero position (N0) from the recorded shadow bevel profile, the two recording elements being arranged at an angle of 90° with respect to one another within or in parallel with the quadrant coordinate system and, in such a case, spanning the quadrant coordinate system (Q1-Q4) by means of corresponding optical longitudinal axes which are guided through the two recording elements, the transport device (5) having at least one continuous opening (51) through which electromagnetic radiation from the light source (6) associated with the opening (51) can be deflected onto the puncture cannula (1).

2. Recording device (100) according to claim 1,
**characterised in that**,
in order to determine the position and/or rotation angle of the bevel surface (11) with respect to the zero position (N0), the recording elements (41) are or can be adjusted in terms of their position relative to the puncture cannula (1) and/or to the transport device (5) during the position-determination sequence of the recording system (4).

3. Recording device (100) according to at least one of the preceding claims,
**characterised in that**
the recording system (4) has a processing unit (8) which processes the optical signals recorded by the recording elements (41) and calculates the rotation angle and/or position of the bevel surface (11) relative to the zero position (N0) therefrom.

4. Recording device (100) according to the preceding claim,
**characterised in that**
by means of the shadow bevel profile generated by the bevel surface (11), a rotational position and/or position of the bevel surface (11) in at least two quadrants (Q1, Q3) of the quadrant coordinate system (Q1-Q4) spanned by the recording elements (41) and/or the light sources (6) can be determined by the processing unit (8), it being possible for the processing unit (8) to determine the position and/or rotation angle of the bevel surface (11) with respect to the zero position (N0) within the two remaining quadrants (Q2, Q4) by means of the position-determination sequence for individually actuating the recording elements (41).

5. Recording device (100) according to at least one of the preceding claims,
**characterised in that**,
for the purpose of identifying the position and/or rotation angle in the two remaining quadrants (Q2, Q4), the two recording elements (41) interchange their two tasks with respect to determination of rotational positions and determination of the position of the bevel surface (11) relative to the light sources (6) and/or the zero position (N0) by means of switching brought about by the position-determination sequence (91).

6. Recording device (100) according to at least one of the preceding claims,
**characterised in that**
a transport speed (V1) of the puncture cannula (1) along the transport direction (3) is at least 400 mm/s and at most 600 mm/s.

7. Recording device (100) according to at least one of the preceding claims,
**characterised in that**
images are recorded by the recording elements (41) by means of at least one flash controller (10).

8. Recording device (100) according to at least one of the preceding claims,
**characterised in that**
the recording system (4) is designed and provided for determining the rotation angle of the bevel surface (11) relative to the zero position (N0) within a tolerance range of 5 angle degrees, inclusive.

9. Recording device (100) according to at least one of the preceding claims,
**characterised in that**
the recording system (4) is designed and provided for determining the position of the bevel surface (1) with respect to the zero position (N0) within a tolerance range of 0.05 mm, inclusive.

10. Recording device according to at least one of the preceding claims, **characterised in that**
the recording system (4) is designed and provided for carrying out a length measurement of the puncture cannula (1).

## Revendications

1. Dispositif de détection (100) pour la détection d'angles de rotation d'au moins une seringue (1), comportant un système de transport de support d'aiguille (2) pour le transport de la seringue (1) le long d'une direction de transport (3) ;
au moins un système d'enregistrement (4), pour l'enregistrement et la détection d'une position et d'un angle de rotation d'une surface d'affûtage (11) de la seringue (1) par rapport à une position zéro (N0) à l'intérieur d'un système de coordonnées à quadrants (Q1-Q4) ; un dispositif de transport (5), le système de transport de support d'aiguille (2) étant transportable le long de la direction de transport (3) sur le dispositif de transport (5), ainsi que comportant au moins deux sources de lumière (6),
au moyen desdites au moins deux sources de lumière (6) un rayonnement électromagnétique étant apte à être dirigé sur la seringue (1), un profil d'affûtage d'ombre produit par la source de lumière (6) de la surface d'affûtage (1) frappant le système d'enregistrement (4) et étant détectable optiquement et/ou électroniquement par celui-ci,
**caractérisé par le fait que**
le système d'enregistrement (4) comporte au moins deux, en particulier exactement deux, éléments d'enregistrement (41), lesquels sont conçus de façon à détecter le profil d'affûtage d'ombre de la surface d'affûtage (11) produit par la surface d'affûtage (11) pendant une séquence de détermination de position et pendant un transport continu, le long de la direction de transport (3), de la seringue (1) disposée en outre dans le système de transport de support d'aiguille (2) et pour déterminer le système d'enregistrement (4) à partir du profil d'affûtage d'ombre détecté, de la position et de l'angle de rotation, de la surface d'affûtage (11) par rapport à la position zéro (N0), les deux éléments d'enregistrement étant disposés l'un par rapport à l'autre dans un angle de 90° dans le ou parallèlement au système de coordonnées à quadrants et définissant dans un tel cas le système de coordonnées à quadrants (Q1-Q4) par des axes longitudinaux optiques correspondants, lesquels sont amenés à passer à travers les deux éléments d'enregistrement, le dispositif de transport (5) présentant au moins une ouverture traversante (51), à travers laquelle le rayonnement électromagnétique traversant de la source de lumière (6), associée à l'ouverture (51), est apte à être dirigé sur la seringue (1).

2. Dispositif de détection (100) selon la revendication 1,
**caractérisé par le fait que**
pour la détermination de la position et/ou de l'angle de rotation de la surface d'affûtage (11) par rapport à la position zéro (N0), les éléments d'enregistrement (41) sont aptes à être changés ou sont changés dans leur position par rapport à la seringue (1) et/ou par rapport au dispositif de transport (5), pendant la séquence de détermination de position du système d'enregistrement (4).

3. Dispositif de détection (100) selon au moins l'une des revendications précédentes, **caractérisé par le fait que**
le système d'enregistrement (4) présente une unité de traitement (8), laquelle traite les signaux optiques enregistrés par les éléments d'enregistrement (41) et calcule à partir de ceux-ci l'angle de rotation et/ou la position de la surface d'affûtage (11) par rapport à la position zéro (N0).

4. Dispositif de détection (100) selon la revendication précédente,
**caractérisé par le fait que**
au moyen du profil d'affûtage d'ombre généré par la surface d'affûtage (11), une position angulaire et/ou une position de la surface d'affûtage (11) est apte à être déterminée par l'unité de traitement (8) dans au moins deux quadrants (Q1, Q3) du système de coordonnées à quadrants (Q1-Q4) défini par les éléments d'enregistrement (41) et/ou les sources de lumière (6), où par l'unité de traitement (8) par la séquence de détermination de position pour la commande individuelle des éléments d'enregistrement (41), la position et/ou l'angle de rotation de la surface d'affûtage (11) par rapport à la position zéro (N0) est apte à être déterminée dans les deux quadrants restants (Q2, Q4).

5. Dispositif de détection (100) selon au moins l'une des revendications précédentes, **caractérisé par le fait que**
pour une détection de la position et/ou de l'angle de rotation dans les deux quadrants restants (Q2, Q4), les deux éléments d'enregistrement (41) échangent leurs deux tâches en ce qui concerne une détermination de position de rotation et une détermination de la position de la surface d'affûtage (11) par rapport aux sources de lumière (6) et/ou de la position zéro (N0) au moyen d'une commutation par la séquence de détermination de position (91).

6. Dispositif de détection (100) selon au moins l'une des revendications précédentes, **caractérisé par le fait que**
une vitesse de transport (V1) de la seringue (1) le long de la direction de transport (3) s'élève à au moins 400 mm/s et à au plus 600 mm/s.

7. Dispositif de détection (100) selon au moins l'une des revendications précédentes, **caractérisé par le fait que**
au moyen d'au moins un contrôleur de flash (100), des images sont enregistrées par les éléments d'enregistrement (41).

8. Dispositif de détection (100) selon au moins l'une des revendications précédentes, **caractérisé par le fait que**
le système d'enregistrement (4) est conçu et prévu de façon à déterminer l'angle de rotation de la surface d'affûtage (11) par rapport à la position zéro (N0) à l'intérieur d'une zone de tolérance d'y compris une valeur de 5 degrés d'angle.

9. Dispositif de détection (100) selon au moins l'une des revendications précédentes, **caractérisé par le fait que**
le système d'enregistrement (4) est conçu et prévu de façon à déterminer la position de la surface d'affûtage (11) par rapport à la position zéro (N0) à l'intérieur d'une zone de tolérance d'y compris une valeur de 0,05 mm.

10. Dispositif de détection selon au moins l'une des revendications précédentes, **caractérisé par le fait que**
le système d'enregistrement (4) est conçu et prévu de façon à effectuer une mesure de longueur de la seringue (1).
